# EUROPEAN PATENT APPLICATION

(11) **EP 1 543 957 A1**
(43) Date of publication of application: **22.06.2005**
(21) Application number: 04257635.5
(22) Date of filing: 08.12.2004
(51) Int. Cl.: B32B 31/00, B01D 67/00

(54) **Method for the manufacture of a porous membrane**

(30) Priority: 09.12.2003 GB 0328485
(71) Applicant: The Rossendale Combining Co. Ltd., Rawtenstall, Lancashire BB4 6JB (GB)
(72) Inventor: Lomax, Terence, Radcliffe, Manchester, M26 1JB (GB); Young, Paul, Heywood, Lancs. OL10 2JB (GB)
(74) Representative: Wilson Gunn M'Caw

(57) **Abstract**

A method for the production of a porous membrane laminate which is permeable to gaseous materials, but impermeable to liquids. The method comprises the steps of preparing a sandwich structure from a flexible substrate and at least one layer of a second material. The flexible substrate and second material may have a layer of adhesive disposed therebetween. Heat and/or pressure is applied to the sandwich structure to produce a laminate. The arrangement is such that the flexible material is only bonded to the second material in certain places, therefore removal of the second material from the substrate gives rise to a perforated layer second material. This is a porous membrane laminate.

## Description

The present invention relates to a method for the manufacture of a porous membrane.

Porous membranes find utility in a wide range of application such as building, medical, clothing and military application as they are permeable to gaseous materials yet impermeable to fluids. Porous membranes can be composed of a substrate to which is bonded a perforated foil material or the substrate can be bonded to a foil material to form a laminate material which can be subsequently perforated.

The nature of the gaseous materials to which these membranes are permeable is dependent upon the size of the perforations of the foil material.

Typically porous membranes of this kind are produced by first making a laminate of a substrate and a foil material, then piercing the laminate with needles or a rotating spiked roller. Whilst this method effectively produces a perforated foil material it also pierces the substrate. This can result in the impermeable nature of the membrane being compromised.

Therefore, it is an object of the present invention to produce a porous membrane laminate wherein the substrate is not perforated.

According to the present invention there is provided a method for the production of a porous membrane laminate which is permeable to gaseous materials, but impermeable to liquids comprising the steps: preparing a sandwich structure comprising a flexible substrate and at least one layer of a second material, said substrate and second material optionally having an adhesive layer disposed therebetween, applying heat and/or pressure over the sandwich structure such that a laminate is produced wherein the second material is selectively bonded to a surface of the substrate and removing the non-bonded second material from the substrate thus providing a substrate with a perforated layer of second material bonded to at least one side thereof.

By selectively bonded it is meant that the second material is not bonded to the entire surface of the substrate, but only to given areas/points. These areas/points can be determined by the method used to prepare the structure. This arrangement gives rise to a perforated porous membrane.

Advantageously, the method of the present invention does not involve piercing the laminate thus eliminating the risk of piercing the substrate which in turn compromises the permeability of the membrane to fluids.

Advantageously, the addition of the layer of second material provides reflectance light, heat and radio frequency emissions and/or electrical and heat conductivity to the surface(s) provided with the second material.

The flexible substrate of the present invention may be of any suitable structure, for example woven or knitted, but is preferably a non-woven textile material, which is constructed from polyester fibre. However, the textile material may also be constructed from any of the following, which may be used alone or in combination polypropylene, polyethylene, polyamide, viscose, rayons, wool and cotton.

The surface of the flexible substrate may be uneven such that there are a number of raised areas. The frequency and nature of these raised areas is also determined by the way in which the substrate is produced. Thus, these areas may be visible to the naked eye or they may be visible only on a microscopic level. Advantageously, these raised areas facilitate the selective bonding of the second material to the substrate as the application of pressure to the aforementioned sandwich structure results in the second material being bonded to the raised areas only.

The second material is preferably a flexible metal foil or a polymeric material which forms a polymeric film upon the surface of the substrate.

The flexible metal foil may be composed of any metal which is sufficiently ductile such that it can be rolled to a suitable thickness in order that it is rendered sufficiently flexible. Typically the metal is aluminium, being preferably between 0.5 and 200 microns in thickness.

The polymeric film may be composed of thermosetting or thermoplastic materials, for example polyester, cross-linked polyurethane, or PTFE. Typically, the polymeric film is preferably between 10 and 100 microns in thickness.

The polymeric material may be applied directly to the substrate in a semi-molten or liquid state or it may be melted onto the substrate. Alternatively, the polymeric material may be applied to the substrate in a solid state by way of an adhesive layer.

The second material may be provided with a carrier or interleaving layer. The carrier or interleaving layer may be applied to the second material prior to the application of the second material to the substrate or it may be applied sequentially i.e. once the second material has been applied to the substrate layer. The said layer may be a thermoplastic film, a treated paper with release properties or other similar material. Advantageously, the carrier facilitates the handling of the second material as for some applications the second material is rolled very thinly and is therefore susceptible to damage. Moreover, the carrier aids the subsequent removal of the second material from the non-bonded areas of the substrate.

The necessity of an adhesive layer is dependent upon the nature of the second material. Where the second material is a foil an adhesive layer is essential. However, where the second material is a polymeric film the use of an adhesive layer is optional.

Where used, the adhesive layer is located between the substrate and the second material and is used to selectively bond the second material to the substrate. The adhesive is preferably thermoplastic and is applied to the substrate and/or the second material in the form of a film net, powder, aqueous suspension or a suspension of thermoplastic material in an organic or inorganic solvent.

Cross-linking adhesive systems and non-thermoplastic adhesives may also be used including thermoset adhesives and pressure sensitive contact adhesives.

Adhesive suitable for use with the present invention include polyolefin, polyamide, polyester or similar thermoplastic products or polyurethane, epoxy or phenolic thermosetting systems.

Where the adhesive is applied as a film net, it may be a continuous film or it may be perforated or have slits therein. The form in which the adhesive is applied to the substrate/second material together with the surface characteristics of the substrate determine the selectivity of the adhesion of the second material to the substrate and ultimately determine the nature of the perforations present in the porous membrane. It is these properties of the adhesive or second material where no adhesive is used and the substrate which enable the size of perforations to be varied such that the porous membrane of the present invention has a wide range of applications.

Typically the size of the perforations range from 0.1mm to 5.0mm.

The second material may be applied to one or both surfaces of the substrate. In any event there is preferably an adhesive material located between the substrate and the or each layer of second material.

Any apparatus for producing the porous membrane of the present invention may be used as long as there is a facility for varying the heat and/or the pressure and/or the dwell time to which the aforesaid sandwich structure is subjected.

Typically, the heat is provided by a heated cylinder, which is in contact with a pressure delivery means. The said delivery means may be a pressure blanket, nip rollers or cylinders to which pressure can be applied mechanically, pneumatically or hydraulically.

The delivery means may have a smooth or patterned surface. Where the surface is patterned its use exerts points of differential pressure on the sandwich structure thereby providing a still further mechanism for the selective bonding of the second material to the substrate. As mentioned previously, the uneven surface of the substrate and/or the way in which the adhesive is applied to the second material and/or the substrate or the way in which the second material is applied directly to the substrate gives rise to selective bonding of the second material thereto. The use of a pressure delivery means having a patterned surface advantageously enhances this selective bonding. Furthermore, by varying all or one of the features which give rise to selective bonding the areas of the substrate to which the second material bonds can be modified such that the size of the resulting perforations can be manipulated to suit the application to which the resulting porous membrane is to be put.

In one embodiment of the present invention the second material is a polymeric material that is applied directly to a surface of a substrate to provide a polymeric film.

In this case the polymeric material is applied directly to the surface of the substrate in a liquid state. The polymeric material is allowed to cool and therefore at least partially solidify such that a polymeric film is formed over the surface of the substrate. A carrier material is then applied to the exposed surface of the polymeric film. The ensuing sandwich structure is passed through a heated cylinder such that heat and pressure are applied to the sandwich structure thus providing a laminate. The cylinder has an uneven patterned surface such that differential pressure is applied to the sandwich structure. Therefore, the polymeric film is bonded to the substrate only at points where pressure is applied. The carrier id then removed from the polymeric material taking with it non-bonded areas of polymeric film giving rise to a substrate having a perforated polymeric film bonded thereto i.e. a porous membrane.

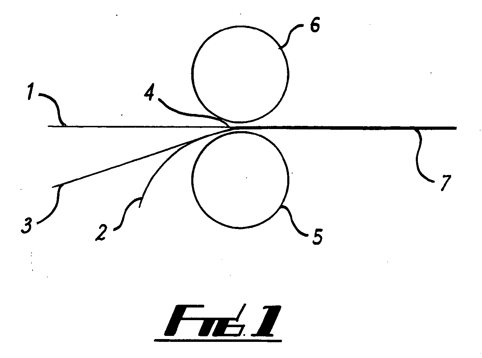

A further embodiment of forming the porous membrane of the present invention is now described with reference to the accompanying drawing in which:-
- Figure 1: is a schematic diagram showing one process for making porous membranes comprising a substrate and a perforated foil layer in accordance with the invention.

The substrate can be provided via spools of material which are unwound, from a roll of material or as a sheet of material. The foil is provided with a carrier, it too may be provided via spools of material which are unwound from a roll of material or as a sheet of material.

The foil and carrier 1 together are brought, via a spool (not shown), into contact with a substrate material 2 and an adhesive material 3 to form a sandwich structure 4. The adhesive is a thermoplastic film. In order that the aforesaid components of the sandwich structure are selectively bonded together the sandwich structure is passed through a heated cylinder which is in contact with nip rollers 5 and 6 thereby applying heat and selective pressure to the sandwich structure 4 to afford a laminate 7. The rollers have an uneven patterned surface such that differential pressure is applied to the sandwich structure. Thus, the foil is bonded to the substrate only at the points where pressure is applied. The carrier is then removed from the foil taking with it non-bonded areas of foil thereby giving rise to a substrate having a layer of perforated foil bonded thereto i.e. a porous membrane.

It is of course to be understood that the invention is not intended to be restricted to the details of the above embodiments which are described by way of example only.

## Claims

1. A method for the production of a porous membrane laminate which is permeable to gaseous materials, but impermeable to liquids comprising the steps:
preparing a sandwich structure comprising a flexible substrate and at least one layer of a second material, said substrate and second material optionally having an adhesive layer disposed therebetween, applying heat and/or pressure over the sandwich structure such that a laminate is produced wherein the second material is selectively bonded to a surface of the substrate and removing the non-bonded second material from the substrate thus providing a substrate with a perforated layer of second material bonded to at least one surface thereof.

2. A method according to claim 1, wherein the flexible structure is a non-woven textile material constructed from polyester fibre.

3. A method according to claim 1 or claim 2, wherein the flexible structure has an uneven surface.

4. A method according to any one of the preceding claims, wherein the second material is a flexible metal foil.

5. A method according to claim 4, wherein the metal foil is between 0.5 and 200 microns in thickness.

6. A method according to claim 4 or claim 5, wherein the metal foil is aluminium.

7. A method according to any one of claims 1 to 3, wherein the second material is composed of a polymeric material.

8. A method according to claim 7, wherein the polymeric material is a thermosetting or thermoplastic material.

9. A method according to claim 7 or claim 8, wherein the polymeric material forms a polymeric film upon a surface of the substrate which is between 10 and 100 microns in thickness.

10. A method according to any one of the preceding claims, wherein the polymeric material is applied directly to the substrate.

11. A method according to any one of claims 1 to 9, wherein the second material is provided with a carrier layer.

12. A method according to claim 11, wherein the carrier layer is applied to the second material prior to the application of the second material to the substrate.

13. A method according to any one of claims 1 to 9, claim 11 or claim 12, wherein the adhesive layer is applied to the surface of the substrate and/or second material in the form of a film net, powder, aqueous suspension or a suspension of thermoplastic material in an organic or inorganic solvent.

14. A method according to claim 13, wherein the adhesive is a polyolefin, polyamide, polyester, polyurethane, epoxy or phenolic based system.

15. A method according to any one of the preceding claims, wherein the membrane has perforations in the range of from 0.1mm to 5.0mm.
